(19) Europäisches Patentamt
European Patent Office
Office européen des brevets

(11) EP 4 557 396 A1

(12) EUROPEAN PATENT APPLICATION
published in accordance with Art. 153(4) EPC

(43) Date of publication:
21.05.2025 Bulletin 2025/21

(21) Application number: 24792798.1

(22) Date of filing: 31.01.2024

(51) International Patent Classification (IPC):
H01M 4/38 (2006.01)          H01M 4/48 (2010.01)
H01M 4/1395 (2010.01)          H01M 4/04 (2006.01)
H01M 10/052 (2010.01)          C01B 33/113 (2006.01)
C01B 33/18 (2006.01)          H01M 4/02 (2006.01)

(52) Cooperative Patent Classification (CPC):
Y02E 60/10

(86) International application number:
PCT/KR2024/001456

(87) International publication number:
WO 2024/219610 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.04.2023 KR 20230052006
30.01.2024 KR 20240014116

(71) Applicant: LG Energy Solution, Ltd.
Seoul 07335 (KR)

(72) Inventors:
• HYUN, Jaeik
  Daejeon 34122 (KR)
• LEE, Yong Ju
  Daejeon 34122 (KR)
• KIM, Donghyuk
  Daejeon 34122 (KR)
• KIM, Dohyeun
  Daejeon 34122 (KR)

(74) Representative: Hoffmann Eitle
Patent- und Rechtsanwälte PartmbB
Arabellastraße 30
81925 München (DE)

(54) ANODE ACTIVE MATERIAL, METHOD FOR PREPARING ANODE ACTIVE MATERIAL, ANODE COMPOSITION, LITHIUM SECONDARY BATTERY ANODE COMPRISING SAME, AND LITHIUM SECONDARY BATTERY COMPRISING ANODE

(57) A negative electrode active material includes a silicon-based active material that includes silicon-based grains. A high angle grain boundary ratio in the silicon-based grains is 30% or more, and the silicon-based active material includes a composition that satisfies following Formulas 1 and 2:

[Formula 1]
about 1 μm < particle size (D50) of silicon-based active material < 10 μm

[Formula 2]
about 2 nm ≤ grain size of silicon-based active material ≤ 1 μm

EP 4 557 396 A1

# *FIG. 1*

```
                    ┌─────────────┐
                    │    START    │
                    └─────────────┘
                           │
                           ▼
S1 ────┐    ┌───────────────────────────────┐
       └────│  PREPARE MELTED-STATE          │◄──────────┐
            │  METAL SILICON                 │           │
            └───────────────────────────────┘           │
                           │                             │
                           ▼                             │
S2 ────┐    ┌───────────────────────────────┐           │
       └────│  PREPARE SILICON PRECURSOR BY  │◄──────────┤
            │  RAPIDLY COOLING MELTED-STATE  │           │
            │  METAL SILICON                 │           │
            └───────────────────────────────┘           │
                           │                             │
                           ▼                             │
                      ╱─────────────╲                    │
S3 ────┐          ╱   DOES SILICON     ╲      NO          │
       └────────╱    PRECURSOR SATISFY   ╲───────────────┘
                ╲    FORMULAS 3 AND 4?   ╱
                  ╲─────────────────────╱
                           │ YES
                           ▼
S4 ────┐    ┌───────────────────────────────┐
       └────│  GRIND METAL SILICON PRECURSOR │◄──────────┐
            └───────────────────────────────┘           │
                           │                             │
                           ▼                             │
                      ╱─────────────╲                    │
S5 ────┐          ╱    DOES GROUND     ╲     NO           │
       └────────╱    PRECURSOR SATISFY   ╲───────────────┘
                ╲    FORMULAS 1 AND 2?   ╱
                  ╲─────────────────────╱
                           │ YES
                           ▼
S6 ────┐    ┌───────────────────────────────┐
       └────│  OBTAIN SILICON-BASED NEGATIVE │
            │  ELECTRODE ACTIVE MATERIAL     │
            └───────────────────────────────┘
                           │
                           ▼
                    ┌─────────────┐
                    │     END     │
                    └─────────────┘
```

**Description**

CROSS-REFERENCE TO RELATED APPLICATIONS

This application is based on and claims priority from Korean Patent Application No. 10-2023-0052006, filed on April 20, 2023, with the Korean Intellectual Property Office, the disclosure of which is incorporated herein in its entirety by reference.

TECHNICAL FIELD

The present disclosure relates to a negative electrode active material, a manufacturing method of the negative electrode active material, a negative electrode composition, a negative electrode for a lithium secondary battery, which includes the same, and a lithium secondary battery including the negative electrode.

BACKGROUND

Due to the rapid increase in the use of fossil fuels, the demand for the use of alternative energy or clean energy is increasing. As part of this, the most actively researched fields are fields of power generation, and storage using electrochemical reactions.

At present, a secondary battery may be exemplified as a representative example of an electrochemical device using such electrochemical energy, and its usage area is gradually expanding.

As the technology development and demand for mobile devices increase, the demand for secondary batteries as an energy source is rapidly increasing. Among these secondary batteries, lithium secondary batteries having high energy density and high voltage, a long cycle life, and a low self-discharge rate have been commercialized and widely used. Also, as for an electrode for the high-capacity lithium secondary battery, researches are being actively conducted on methods for manufacturing a high-density electrode having a higher energy density per unit volume.

In general, a secondary battery is composed of a positive electrode, a negative electrode, an electrolyte, and a separator. The negative electrode includes a negative electrode active material through which lithium ions released from the positive electrode are intercalated and deintercalated. As for the negative electrode active material, silicon-based particles with a large discharge capacity can be used. Therefore, researches on the performance improvement of the negative electrode active material using silicon-based particles are being actively conducted (see Japanese Laid-open patent publication No. 2009-080971).

SUMMARY

As a result of research for reducing a grain size, it has been confirmed through the research that a target grain size can be reduced and a high angle grain boundary ratio can be adjusted when, prior to pulverization of existing metallurgical grade (MG)-Si, the cooling speed is adjusted in a rapid cooling process, and then a plate-shaped silicon precursor is formed and ground.

The present application relates to a negative electrode active material, a manufacturing method of the negative electrode active material, a negative electrode composition, a negative electrode for a lithium secondary battery, which includes the same, and a lithium secondary battery including the negative electrode.

According to one embodiment of the present specification, provided is a negative electrode active material including a silicon-based active material. In the negative electrode active material, the silicon-based active material includes silicon-based grains, a high angle grain boundary ratio in the silicon-based grains is 30% or more, and the silicon-based active material satisfies the following Formulas 1 and 2.

$$[\text{Formula 1}]$$
$$\text{about } 1 \text{ μm} \leq \text{particle size (D50) of silicon-based active material} \leq \text{about } 10 \text{ μm}$$

$$[\text{Formula 2}]$$
$$\text{about } 2 \text{ nm} \leq \text{grain size of silicon-based active material} \leq \text{about } 1 \text{ μm}$$

According to another embodiment, provided is a method of manufacturing a negative electrode active material. The manufacturing method of the negative electrode active material includes the steps of: rapidly cooling metal silicon to form a silicon precursor; and grinding the silicon precursor to form a silicon-based active material. The step of rapidly cooling the metal silicon includes melt-spinning, suction casting or injection casting.

According to another embodiment, provided is a negative electrode composition including the negative electrode active material according to the present application; a negative electrode conductive material; and a negative electrode binder.

According to another embodiment, provided is a negative electrode for a lithium secondary battery. The negative electrode includes a negative electrode current collector layer; and a negative electrode active material layer provided on one surface or both surfaces of the negative electrode current collector layer. The negative electrode active material layer includes the negative electrode composition according to the present application or a cured product thereof.

Also, provided is a lithium secondary battery including a positive electrode; the negative electrode for the lithium secondary battery according to the present application; a separator provided between the positive electrode and the negative electrode; and an electrolyte.

Unlike in a conventional grinding processing method, the negative electrode active material according to one embodiment of the present disclosure is fabricated by, prior to metallurgical grade (MG)-Si pulverization, performing a rapid cooling process to form a plate-shaped silicon precursor, and the grain size and the high angle grain boundary ratio of the silicon-based active material can be optimized by controlling the cooling speed.

As described above, it is possible to obtain a silicon-based active material having nano-sized grains by pulverizing a plate-shaped silicon precursor having nano-sized grains. Then, when the silicon-based active material is used to manufacture a negative electrode, the cycle capacity maintenance rate and the initial capacity efficiency are increased.

The negative electrode active material of the present disclosure contains one or more selected from the group consisting of $SiOx$ (x=0) and $SiOx$ (0<x<2) as the silicon-based active material, and the content of $SiOx$ (x=0) is about 70 parts by weight or more relative to 100 parts by weight of the silicon-based active material. For example, although a pure Si active material is included, the problem of volume expansion due to charging/discharging, which is a problem caused by the pure Si active material, is solved through grain size adjustment.

BRIEF DESCRIPTION OF THE DRAWINGS

FIG. 1 is a flowchart of a manufacturing process of a silicon-based active material according to one embodiment of the present application.

FIG. 2 illustrates an enlarged-scale view of the silicon-based active material according to one embodiment of the present application.

FIG. 3 is a view illustrating a stacked structure of a negative electrode for a lithium secondary battery according to one embodiment of the present application.

FIG. 4 is a view illustrating a stacked structure of the lithium secondary battery according to one embodiment of the present application.

FIG. 5 is a view illustrating a method of calculating a grain size.

FIG. 6 is a view illustrating a misorientation angle.

In some of the accompanying drawings, the same reference numerals are given to corresponding components. Those skilled in the art understand that the drawings depict elements simply and clearly, and are not necessarily drawn according to the scale. For example, in order to facilitate the understanding of various embodiments, the dimensions of some elements illustrated in the drawings may be exaggerated compared to other elements in the illustration. Also, elements of useful or essential known techniques in commercially viable embodiments may often not be depicted so as not to interfere with the spirit of various embodiments of the present disclosure.

DETAILED DESCRIPTION

Before the explanation of the present disclosure, first, some terms are defined.

In the [0002] present specification, when it is said that a certain part "includes" a certain component, this means that the certain part may further include other components rather than excluding other components unless specifically stated to the contrary.

In the present specification, 'p to q' means a range of 'p or more and q or less'.

In the present specification, the "specific surface area" is measured by a BET method, and is specifically calculated from a nitrogen gas adsorption amount by using BELSORP-mini II of BEL Japan under a liquid nitrogen temperature (77K). That is, in the present application, the BET specific surface area may refer to a specific surface area measured by the above measurement method.

In the present specification, "Dn" refers to a particle size distribution, and refers to a particle diameter at a n% point in the cumulative distribution of the number of particles according to the particle diameter. That is, D50 is a particle diameter (average particle diameter) at a 50% point in the cumulative distribution of the number of particles according to the particle diameter, D90 is a particle diameter at a 90% point in the cumulative distribution of the number of particles according to the particle diameter, and D10 is a particle diameter at a 10% point in the cumulative distribution of the number of particles according to the particle diameter. Meanwhile, the average particle diameter may be measured by using a laser diffraction method. For example, powder to be measured is dispersed in a dispersion medium, and then is introduced into a commercially available laser diffraction particle size measurement device (e.g., Microtrac S3500). When particles pass through a laser beam, a particle size distribution is calculated by measuring a difference in the diffraction pattern depending on the particle size.

In one embodiment of the present application, the particle size or the particle diameter may mean an average diameter or a representative diameter of individual grains constituting metal powder.

In the present specification, the meaning that a polymer contains a certain monomer as a monomer unit means that the monomer participates in a polymerization reaction and is included as a repeating unit within the polymer. In the present specification, when it is said that a polymer contains a monomer, this is interpreted in the same way that a polymer contains a monomer as a monomer unit.

] In the present specification, a 'polymer' is understood to be used in a broad sense including copolymers unless specified as a 'homopolymer'.

In the present specification, a weight average molecular weight (Mw) and a number average molecular weight (Mn) are polystyrene equivalent molecular weights measured by gel permeation chromatography (GPC) using monodisperse polystyrene polymers (standard sample) having various degrees of polymerization as standard materials. The monodisperse polystyrene polymers are commercially available for molecular weight measurement. In the present specification, a molecular weight means a weight average molecular weight unless otherwise specified.

"About", "approximately", and "substantially" used in the present specification are used to mean ranges of numerical values or degrees or approximations thereof, taking into account inherent manufacturing and material tolerances, and are used to prevent infringers from unfairly using the disclosed contents in which precise or absolute figures provided to aid the understanding of the present disclosure are mentioned.

In accordance with the recent demand for high-density energy batteries, researches are being conducted on a method of increasing the battery capacity by using silicon-based compounds such as Si/C or SiOx together, as a negative electrode active material. The capacity of the silicon-based compounds is more than ten times greater than that of graphite-based materials. Meanwhile, the silicon-based compound, which is a high-capacity material, has a large capacity as compared to conventionally used graphite, but has a problem in that the volume rapidly expands during a charging process and a conductive path is cut off, thereby deteriorating battery characteristics.

Accordingly, various researches are being conducted to solve problems in the use of the silicon-based compound as the negative electrode active material. For example, discussions are being conducted on a method of controlling a driving potential to use a silicon-based compound as a negative electrode active material, a method of suppressing the volume expansion itself, such as a method of additionally coating a thin film on an active material layer, or a method of controlling the particle diameter of a silicon-based compound, or various methods for preventing a conductive path from being disconnected, but each method has advantages and disadvantages.

Meanwhile, in the case of Si negative electrode active materials, studies have found out that since the grain boundary acts as a diffusion path of lithium, a wider grain boundary, that is, a smaller grain size is more advantageous for the performance characteristics of secondary batteries. However, in a case where a negative electrode active material is manufactured by pulverizing Metallurgical Grade Si (MG-Si), since the general grain size of MG-Si ranges from hundreds of $\mu$m to several mm, there is a limit to the reduction of the grain size of the Si active material. Thus, there is still a limit to improvement of performance characteristics of secondary batteries.

The present disclosure provides a technology that can control a grain size in Si particles, for example, by reducing the grain size in Si particles to a size of several nm to several tens of nm, so that even when a silicon-based active material is used as a negative electrode active material to improve the capacity performance of secondary batteries, the conductive path is prevented from being damaged by volume expansion of a silicon-based compound.

Hereinafter, the present disclosure will be described in detail with reference to drawings so that a person with ordinary skill in the technical field to which the present disclosure pertains can easily implement the present disclosure. However, the present disclosure may be implemented in various different forms, and is not limited by the following description.

According to one embodiment of the present specification, a negative electrode active material is provided. The negative electrode active material contains a silicon-based active material, and the silicon-based active material includes silicon-based grains. The high angle grain boundary ratio (HAGB) in the silicon-based grains is 30% or more, and the silicon-based active material satisfies the following Formulas 1 and 2.

[Formula 1]
about 1 μm ≤ particle size (D50) of silicon-based active material ≤ about 10 μm

[Formula 2]
about 2 nm ≤ grain size of silicon-based active material ≤ about 1 μm

Unlike the conventional grinding process, in the negative electrode active material according to one embodiment of the present disclosure, prior to MG-Si pulverization, a rapid cooling process is performed to form a plate-shaped silicon precursor. As a result, it is possible to optimize the grain size and the high angle grain boundary (HAGB) ratio in a silicon-based active material prepared by pulverizing the plate-shaped silicon precursor generated through adjustment of the cooling speed.

As described above, the silicon-based active material having nano-sized grains can be obtained by pulverizing the plate-shaped silicon precursor having nano-sized grains. When the silicon-based active material is used to manufacture a negative electrode for a lithium secondary battery, the cycle capacity maintenance rate and the initial capacity efficiency of the lithium secondary battery are increased.

In one embodiment of the present application, the silicon-based active material includes one or more selected from the group consisting of SiOx (x=0) and SiOx (0<x<2), and the content of SiOx (x=0) may be about 70 parts by weight or more relative to 100 parts by weight of the silicon-based active material.

In one embodiment of the present application, the silicon-based active material includes SiOx (x=0), and the content of SiOx (x=0) may be about 70 parts by weight or more relative to 100 parts by weight of the silicon-based active material.

In another embodiment, the content of SiOx (x=0) may be about 70 parts by weight or more relative to 100 parts by weight of the silicon-based active material, for example, about 80 parts by weight or more, or about 90 parts by weight or more, or may be about 100 parts by weight or less, for example, about 99 parts by weight or less, or about 95 parts by weight or less.

In one embodiment of the present application, pure silicon (Si) particles may be used as the silicon-based active material. Using pure silicon (Si) particles as the silicon-based active material may mean that pure Si particles (SiOx (x=0)) not combined with other particles or elements are contained in the above range, relative to the total of 100 parts by weight of the silicon-based active material as described above.

In one embodiment of the present application, the silicon-based active material may be composed of silicon-based particles in which the content of SiOx (x=0) is 100 parts by weight relative to 100 parts by weight of the silicon-based active material.

In one embodiment of the present application, the silicon-based active material may contain metal impurities. Here, the impurities are metals that may be generally included in the silicon-based active material, and the content thereof may be, for example, about 0.1 parts by weight or less relative to 100 parts by weight of the silicon-based active material.

The silicon-based active material used as the negative electrode active material of the lithium secondary battery has a significantly higher capacity than a conventionally used graphite-based active material, and thus attempts to apply the silicon-based active material are increasing. However, due to the high volume expansion rate during a charging/discharging process, these attempts are limited to a case where a trace amount of silicon-based active material is mixed with the graphite-based active material and is used.

Meanwhile, in the case of the present disclosure, while the silicon-based active material is used as the negative electrode active material in order to improve capacity performance, conventional problems have been solved by adjusting (controlling) the grain size of the silicon-based active material itself rather than adjusting the composition of a conductive material and a binder.

In the manufacturing process of the negative electrode active material of the present application, in order to reduce the grain size, prior to MG-Si pulverization, a rapid cooling process is performed to prepare a plate-shaped silicon precursor, and then the silicon-based active material is manufactured by grinding the precursor.

In one embodiment of the present application, the silicon precursor satisfies the following Formulas 3 and 4.

[Formula 3]
about 10 μm ≤ plate thickness of silicon precursor ≤ about 2 mm

[Formula 4]
about 2 nm ≤ grain size in silicon precursor ≤ about 1 μm

In one embodiment of the present application, the above Formula 3 satisfies about 10 μm ≤ plate thickness of silicon precursor ≤ 2 mm, about 13 μm ≤ plate thickness of silicon precursor ≤ 1.5 mm, or about 15 μm ≤ plate thickness of silicon precursor ≤ 1 mm.

In one embodiment of the present application, the above Formula 4 satisfies about 2 nm ≤ grain size in silicon precursor ≤ 1 μm, or may satisfy, for example, about 10 nm ≤ grain size in silicon precursor ≤ 1 μm, or about 40 nm ≤ grain size in silicon precursor ≤ 1 μm.

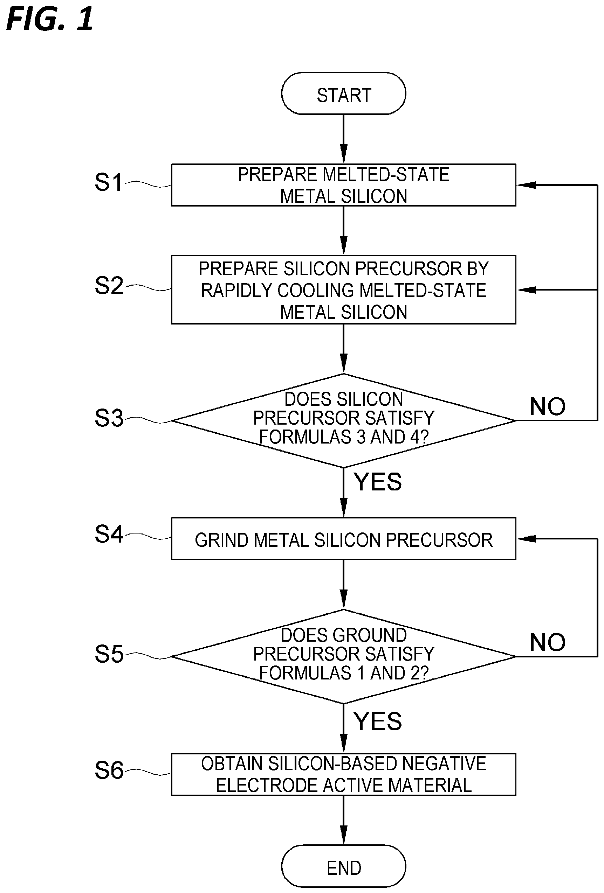

Referring to FIG. 1, according to an embodiment of the present disclosure, in forming a plate-shaped silicon precursor through melt-spinning, first, MG silicon is put in a graphite crucible and a current of about 10 kA flows through a copper coil to prepare silicon in a melted state of about 2000°C (S1). Next, a plate-shaped silicon precursor is manufactured by injecting the melted-state silicon at a pressure of 1.2 kPa into a copper wheel having a diameter of 25 cm and rotating at a speed of 3000 rpm (S2). Meanwhile, it is checked whether the prepared precursor satisfies the Formulas 3 and 4 (S3). Then, when the Formulas 3 and 4 are satisfied (S3, YES), the prepared silicon precursor is grounded by, for example, a method such as ball mill, pin mill, disk mill or jet mill to form a silicon-based active material (S4). When the prepared precursor does not satisfy the Formulas 3 and 4 in S3, the process returns to the step S1 and the step of preparing the metal silicon in the melted state is repeated, or the process returns to the step S2 and the step of preparing the plate-shaped metal silicon by rapidly cooling the melted-state metal silicon is repeated. Meanwhile, it is checked whether the formed active material satisfies the Formulas 1 and 2 in the step S5. Then, when the Formulas 1 and 2 are satisfied (YES, S5), the silicon-based active material is obtained in the step S6 and the process is ended. Thereafter, the obtained silicon-based active material may be used to manufacture, for example, a negative electrode of a lithium secondary battery. Meanwhile, when the formed active material does not satisfy the Formulas 1 and 2 in the step S5 (S5, NO), the process returns to the step of S4 and the step is repeated.

In the manufacturing process of the negative electrode active material of the present application, in order to reduce the grain size, prior to MG-Si pulverization, a rapid cooling process is performed on MG-Si in a melted state to prepare a plate-shaped silicon precursor, and then the prepared silicon precursor satisfies the above Formulas 3 and 4 through the corresponding adjustment.

The silicon-based active material having nano-size-level grains can be obtained by grinding the above plate-shaped silicon precursor having nano-size-level grains, and then can be used to manufacture the negative electrode. Thus, for example, the cycle capacity maintenance rate and the initial capacity efficiency of the secondary battery are increased.

In one embodiment of the present application, the silicon-based active material may be formed by grinding the above-described plate-shaped silicon precursor, and the silicon-based active material according to the present application satisfies the following Formulas 1 and 2.

[Formula 1]
about 1 μm ≤ particle size (D50) of silicon-based active material ≤ 10 μm

[Formula 2]
about 2 nm ≤ grain size of silicon-based active material ≤ 1 μm

The above Formula 1 may satisfy, for example, a range of about 3 μm ≤ particle size (D50) of silicon-based active material ≤ 9 μm, or about 3 μm ≤ particle size (D50) of silicon-based active material ≤ 7 μm.

Also, the above Formula 2 may satisfy, for example, about 5 nm ≤ grain size of silicon-based active material ≤ 700 nm, or about 20 nm ≤ grain size of silicon-based active material ≤ 500 nm.

As described above, the grain size is adjusted when the silicon precursor is formed, and a grinding process is additionally performed so that the grain size in the range of the above Formula 2 is finally satisfied. Accordingly, the cycle capacity maintenance rate and the initial capacity efficiency of the secondary battery are increased.

In one embodiment of the present application, the grain size may be calculated by the value of the full width at half maximum (FWHM) through an XRD analysis. For example, from

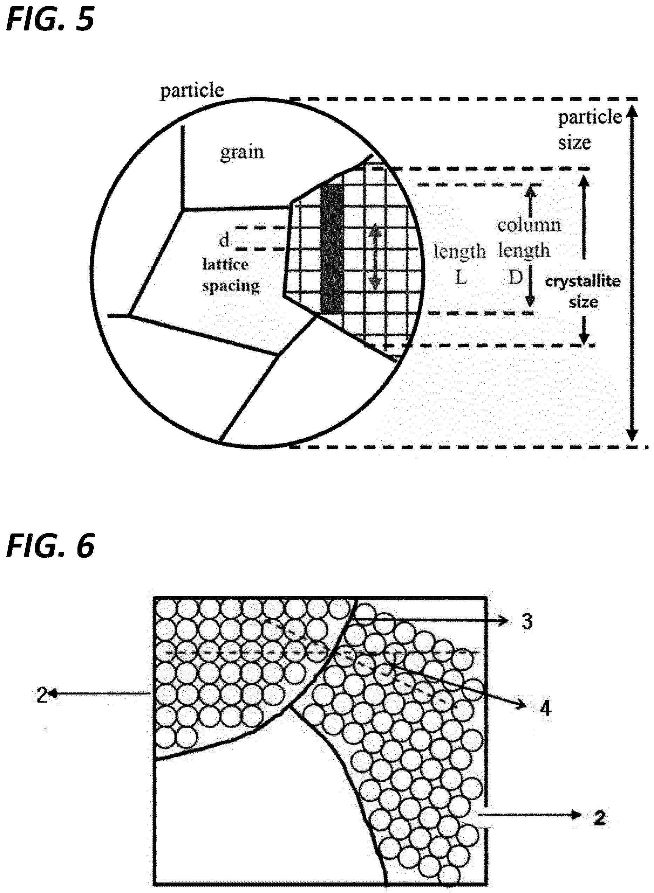

FIG. 5, a grain size calculating method can be found. In FIG. 5, the remaining values except for L can be measured through an XRD analysis of the silicon-based active material, and the grain size can be measured through the Debye-Scherrer equation that the FWHM and the grain size are in inverse proportion. Here, the Debye-Scherrer equation is as illustrated in the following Formula 1-1.

[Formula 1-1]

$$FWHM = K\lambda / LCos\theta$$

In the above Formula 1-1,

L is a grain size, K is a constant, $\theta$ is a Bragg angle, and $\lambda$ represents an X-ray wavelength.

Also, the shapes of grains are diverse and can be three-dimensionally measured, and the size of grains can be measured by a generally used circle method or diameter measurement method, but the present disclosure is not limited thereto.

In the diameter measurement method, the measurement may be performed by drawing 5 to 10 equilibrium lines (one line has a length of L mm) on the micrograph of target particles, and counting and averaging the numbers of grains z on the lines. Here, only those fully present on the line are counted and those partially present on the line are excluded. If the number of lines is P, and the magnification is V, the average particle diameter may be calculated through the following Formula 1-2.

$$[\text{Formula 1-2}]$$
$$Dm = (L*P*10^3)/(zV) \text{ (um)}$$

Also, the circle method is a method of drawing a circle with a predetermined diameter on the micrograph of target particles, and obtaining the average area of grains by the number of grains present inside the circle and the number of grains present on the boundary line. The calculation may be performed by the following Formula 1-3.

$$[\text{Formula 1-3}]$$
$$Fm = (Fk * 10^6) / ((0.67n + z) \, V^2) \text{ (um}^2)$$

In the above Formula 1-3, Fm indicates an average particle area, Fk indicates a measurement area on the photograph, z indicates the number of particles present inside the circle, n indicates the number of particles present on the circular arc, and V indicates the magnification of a microscope.

In the negative electrode active material provided in one embodiment of the present application, the silicon-based active material includes silicon-based grains, and the high angle grain boundary ratio in the silicon-based grains is about 30% or more.

In another embodiment, the silicon-based active material includes silicon-based grains, and the high angle grain boundary ratio in the silicon-based grains may be about 30% or more, 35% or more, or 40% or more, or may be about 80% or less, 75% or less, or 70% or less.

In the present application, the silicon-based grains may refer to individual particles forming the silicon-based active material, and the silicon-based grains may be collected to form a silicon-based active material. Here, the grain boundary may be defined as a defect between the corresponding grains.

In the case of manufacturing using the above-described manufacturing method, many high angle grain boundaries (HAGB) with high grain boundary energy are formed. In the case of the high angle grain boundary, diffusion of lithium ions is easier than in the low angle grain boundary (LAGB).

In the present application, the high angle grain boundary ratio may refer to a ratio of grain boundaries with a boundary angle of about 15° or more in the entire silicon-based active material.

In the present application, the high angle grain boundary may mean that a misorientation angle is greater than about 15°, and the low angle grain boundary may mean that a misorientation angle is less than about 2° < (misorientation angle) <15°.

FIG. 6 is a view illustrating a misorientation angle. The corresponding misorientation angle 4 can be defined as the angle for the difference in the crystal orientation between two adjacent silicon-based grains 2. Here, the grain boundary may be defined as a crystal defect between different silicon-based grains 2.

In the silicon-based active material according to the present application, the high angle grain boundaries can be formed at a relatively high ratio relative to all grain boundaries, thereby improving battery performance.

In the negative electrode active material provided in one embodiment of the present application, the average misorientation angle of the silicon-based grains is about 5° or more.

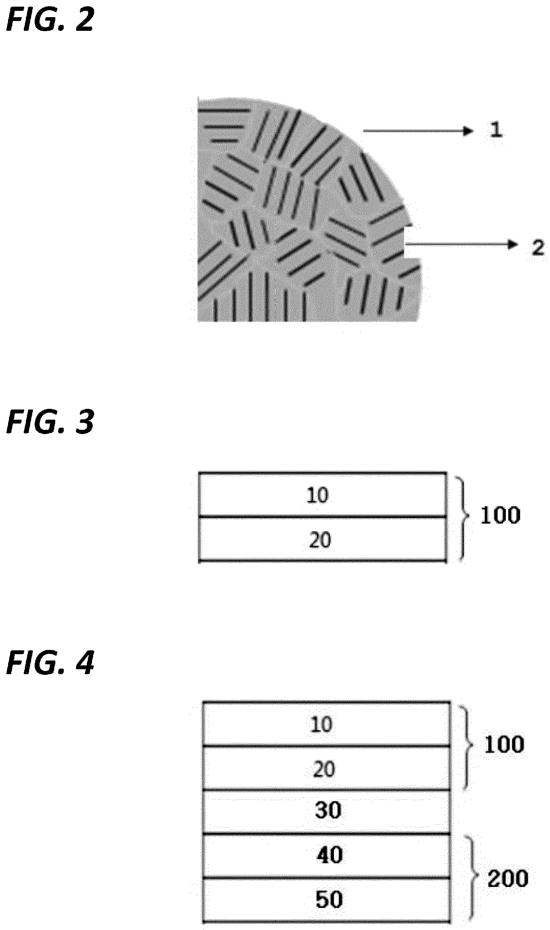

FIG. 2 illustrates an enlarged-scale view of the silicon-based active material according to one embodiment of the present application. For example, the silicon-based active material 1 is composed of a plurality of silicon-based grains 2, and here, the grain has a grain size of the above Formula 2. Also, the crystal defect between the silicon-based grains may be defined as a grain boundary.

In one embodiment of the present application, the silicon-based active material may include silicon-based particles having a particle size distribution of about 0.01 $\mu$m to 30 $\mu$m.

The fact that the silicon-based active material includes silicon-based particles having a particle size distribution of about 0.01 $\mu$m to 30 $\mu$m means that a large number of individual silicon-based particles having particle sizes falling within the above range are included. The number of silicon-based particles to be included is not limited.

When the silicon-based particle is spherical, the particle size can be indicated by a diameter of the particle, and even if the silicon-based particle has a shape other than a spherical shape, the particle size can be measured as compared with the case of the spherical shape. In general, the particle size of individual silicon-based particles can be measured by a method used for measurement in the art.

In one embodiment of the present application, the silicon-based active material may exist in, for example, a crystalline or amorphous form, and is not, for example, porous. Silicon particles are, for example, spherical or fragmented particles. According to one embodiment, silicon particles may also have a fibrous structure or may be present in the form of a silicon-containing film or coating.

In one embodiment of the present application, provided is a negative electrode composition including the negative electrode active material; a negative electrode conductive material; and a negative electrode binder.

In the negative electrode composition provided in one embodiment of the present application, the negative electrode active material accounts for about 40 parts by weight or more of 100 parts by weight of the negative electrode composition.

In another embodiment, the content of the negative electrode active material may be about 40 parts by weight or more relative to 100 parts by weight of the negative electrode composition, or may be, for example, 60 parts by weight or more, 65 parts by weight or more, or 70 parts by weight or more, and may be 95 parts by weight or less, 90 parts by weight or less, or 85 parts by weight or less.

The negative electrode composition according to the present application uses a negative electrode active material that satisfies a specific surface area size so that a volume expansion rate can be controlled during a charging/discharging process even when a silicon-based active material having a significantly high capacity is used within the above range. Thus, characteristically, even if the content of the silicon-based active material falls within the above range, the performance of the negative electrode is not deteriorated and the output characteristics are improved in charging and discharging over the conventional secondary batteries.

Conventionally, a graphite-based compound has been generally used as the negative electrode active material. Meanwhile, recently, as the demand for high-capacity batteries increases, there are increasing attempts to use the silicon-based active material through mixing so as to increase the capacity. However, as described above, even if characteristics of the silicon-based active material itself are adjusted, the volume of the silicon-based active material rapidly expands during a charging/discharging process, which may cause a problem of damaging a conductive path formed in the negative electrode active material layer.

In one embodiment of the present application, the negative electrode conductive material may include one or more selected from the group consisting of a dot-type conductive material, a surface-type conductive material and a linear-type conductive material.

In one embodiment of the present application, the dot-type conductive material refers to a dot-type or spherical conductive material which can be used to improve conductivity in the negative electrode, and has conductivity without causing chemical changes. For example, the dot-type conductive material may be at least one type selected from the group including natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide and polyphenylene derivatives, and may include carbon black in one embodiment in terms of high conductivity achievement, and improved dispersibility.

In one embodiment of the present application, the BET specific surface area of the dot-type conductive material may be about 40 m$^2$/g to 70 m$^2$/g, or may be, for example, 45 m$^2$/g to 65 m$^2$/g, or 50 m$^2$/g to 60 m$^2$/g.

In one embodiment of the present application, the functional group content (volatile matter) of the dot-type conductive material may satisfy a range of about 0.01% to about 1%, for example, about 0.01% to about 0.3%, or about 0.01% to about 0.1%.

When the functional group content of the dot-type conductive material satisfies the above range, since there is a functional group present on the surface of the dot-type conductive material, when water is used as a solvent, the dot-type conductive material may be smoothly dispersed in the solvent. For example, in the present disclosure, by using a specific silicon-based active material, the functional group content of the dot-type conductive material can be lowered. This causes an improved effect in dispersibility improvement.

In one embodiment of the present application, together with the silicon-based active material, the dot-type conductive material is included in which the functional group content falls within the above range. The functional group content may be adjusted in accordance with the degree of heat treatment of the dot-type conductive material.

In one embodiment of the present application, the particle diameter of the dot-type conductive material may be about 10 nm to about 100 nm, or may be, for example, about 20 nm to 90 nm, or about 20 nm to 60 nm.

In one embodiment of the present application, the conductive material may include the surface-type conductive material.

The surface-type conductive material may perform a role of improving conductivity by increasing surface contact between silicon particles within the negative electrode, and at the same time, a role of suppressing a conductive path from being disconnected by volume expansion. The surface-type conductive material may be expressed as a plate-shaped conductive material or a bulk-type conductive material.

In one embodiment of the present application, the surface-type conductive material may include at least one selected from the group consisting of plate-shaped graphite, graphene, graphene oxide, and graphite flakes, and according to an embodiment, may be plate-shaped graphite.

In one embodiment of the present application, the average particle diameter (D50) of the planar conductive material may be about 2 $\mu$m to 7 $\mu$m, and may be, for example, about 3 $\mu$m to 6 $\mu$m, or about 3.5 $\mu$m to 5 $\mu$m. When the above range is satisfied, due to a sufficient particle size, dispersion is easy without causing an excessive increase in the viscosity of a negative electrode slurry. Therefore, the dispersion effect is improved in the dispersion using the same equipment and time.

In the negative electrode composition provided in one embodiment of the present application, D10 of the planar conductive material may be about 0.5 $\mu$m to 2.0 $\mu$m, D50 may be about 2.5 $\mu$m to 3.5 $\mu$m, and D90 may be about 6.5 $\mu$m to 15.0 $\mu$m.

In one embodiment of the present application, as for the surface-type conductive material, a high specific surface area-planar conductive material having a high BET specific surface area; or a low specific surface area-planar conductive material may be used.

In one embodiment of the present application, although the high specific surface area-surface-type conductive material; or the low specific surface area- surface-type conductive material may be used as the surface-type conductive material without limitation, since the electrode performance may be affected to some extent by the dispersion of the planar conductive material according to an embodiment, the low specific surface area- surface-type conductive material causing no problems in dispersion may be used.

In one embodiment of the present application, the BET specific surface area of the surface-type conductive material may be about 0.25 m$^2$/g or more.

In another embodiment, the BET specific surface area of the planar conductive material may be about 1 m$^2$/g to 500 m$^2$/g, and may be, for example, about 5 m$^2$/g to 300 m$^2$/g, or 5 m$^2$/g to 250 m$^2$/g.

As for the surface-type conductive material according to the present application, a high specific surface area-planar conductive material; or a low specific surface area-planar conductive material may be used.

In another embodiment, the planar conductive material is a high specific surface area-surface-type conductive material, and its BET specific surface area may satisfy a range of about 50 m$^2$/g to 500 m$^2$/g, for example, about 80 m$^2$/g to 300 m$^2$/g, or 100 m$^2$/g to 300 m$^2$/g.

In another embodiment, the surface-type conductive material is a low specific surface area-planar conductive material, and its BET specific surface area may satisfy a range of about 1 m$^2$/g to 40 m$^2$/g, for example, about 5 m$^2$/g to 30 m$^2$/g, or 5 m$^2$/g to 25 m$^2$/g.

Other conductive materials may include linear-type conductive materials such as carbon nanotubes. The carbon nanotubes may be bundle-type carbon nanotubes. The bundle-type carbon nanotubes may include a plurality of carbon nanotube units. For example, here, the 'bundle-type' refers to a secondary shape in the form of a bundle or a rope unless otherwise stated, in which carbon nanotube units are arranged side by side or are entangled while the longitudinal axes of the carbon nanotube units are substantially in the same orientation. The carbon nanotube unit has a graphite surface (graphite sheet) in the form of a cylinder with a nano-sized diameter, and has an sp2-bonded structure. Here, depending on the angle and structure in which the graphite surface is rolled, characteristics of a conductor or a semiconductor can be exhibited. The bundle-type carbon nanotubes may be uniformly dispersed in the manufacturing of the negative electrode as compared to the entangled-type carbon nanotubes, and then a conductive network in the negative electrode may be smoothly formed, thereby improving the conductivity of the negative electrode.

In the negative electrode composition provided in one embodiment of the present application, the negative electrode conductive material accounts for about 10 parts by weight to 40 parts by weight of 100 parts by weight of the negative electrode composition.

In another embodiment, the content of the negative electrode conductive material may be about 0.1 parts by weight to 40 parts by weight relative to 100 parts by weight of the negative electrode composition, for example, about 0.2 parts by weight to 30 parts by weight, about 0.4 parts by weight to 25 parts by weight, or about 0.4 parts by weight to 10 parts by weight.

In the negative electrode composition provided in one embodiment of the present application, the negative electrode conductive material includes a surface-type conductive material; and a linear-type conductive material.

In the negative electrode composition provided in one embodiment of the present application, in the negative electrode conductive material, the content of the surface-type conductive material may be about 80 parts by weight to 99.9 parts by weight relative to 100 parts by weight of the negative electrode conductive material; and the content of the linear-type conductive material may be about 0.1 parts by weight to 20 parts by weight.

In another embodiment, in the negative electrode conductive material, the content of the surface-type conductive material may be about 80 parts by weight to 99.9 parts by weight relative to 100 parts by weight of the negative electrode conductive material, for example, about 85 parts by weight to 99.9 parts by weight, or 95 parts by weight to 98 parts by weight.

In another embodiment, in the negative electrode conductive material, the content of the linear-type conductive material may be about 0.1 parts by weight to 20 parts by weight relative to 100 parts by weight of the negative electrode conductive material, for example, 0.1 parts by weight to 15 parts by weight, or 0.2 parts by weight to 5 parts by weight.

In one embodiment of the present application, when the negative electrode conductive material includes the surface-type conductive material and the linear-type conductive material, and these conductive materials satisfy the above composition and ratios, existing lifespan characteristics of lithium secondary batteries are not significantly affected. For example, when the planar conductive material and the linear conductive material are included, chargeable and dischargeable points are increased. Then, at a high C-rate, the output characteristics of the secondary battery are improved and the amount of generated high-temperature gas is reduced over the conventional secondary batteries.

In one embodiment of the present application, the negative electrode conductive material may be composed of the surface-type conductive material. When the linear-type conductive material is used alone, a problem with a silicon-based negative electrode, *e.g.,* the electrode tortuosity, can be simplified, and the electrode structure can be improved. Therefore, the movement resistance of lithium ions in the electrode can be reduced.

In one embodiment of the present application, when the negative electrode conductive material includes the linear-type conductive material alone, the content of the negative electrode conductive material may be about 0.1 parts by weight to 5 parts by weight relative to 100 parts by weight of the negative electrode composition, for example, about 0.2 parts by weight to 3 parts by weight, or about 0.4 parts by weight to 1 parts by weight.

The negative electrode conductive material according to the [0005] present application has a substantially separate configuration from a positive electrode conductive material applied to the positive electrode. That is, the negative electrode conductive material according to the present application performs a role of controlling a contact point between silicon-based active materials causing a very large expansion in the electrode volume in charging and discharging. Meanwhile, the positive electrode conductive material performs a role of a buffer when rolled, and performs a role of providing some conductivity, and thus has substantially different configurations and roles from the negative electrode conductive material of the present disclosure.

Also, the negative electrode conductive material according to the present application is applied to the silicon-based active material, and has a substantially different configuration from a conductive material applied to the graphite-based active material. For example, the conductive material used for an electrode having the graphite-based active material simply has smaller particles than the active material, and has a property of improving output characteristics and providing some conductivity, and thus has substantially different configurations and roles from the negative electrode conductive material applied together with the silicon-based active material as in the present disclosure.

In one embodiment of the present application, the above-described planar conductive material used as the negative electrode conductive material has a different structure and role from a carbon-based active material generally used as the negative electrode active material. For example, the carbon-based active material used as the negative electrode active material may be artificial graphite or natural graphite, and refers to a material that is processed and used in the form of a spherical or dot shape so as to facilitate the storage and release of lithium ions.

Meanwhile, the surface-type conductive material used as the negative electrode conductive material is a material having a planar or plate shape, and may be expressed as plate-shaped graphite. For example, the surface-type conductive material is a material included to maintain a conductive path within a negative electrode active material layer and refers to a material that is not used as a role of storing and releasing lithium but is used to secure a conductive path by a surface shape within the negative electrode active material layer.

That is, in the present application, the fact that the plate-shaped graphite is used as the conductive material means that the graphite is processed into a surface or plate shape and is not used as a role of storing or releasing lithium but is used as a material for securing a conductive path. Here, the negative electrode active material included together with the surface-shaped graphite has high capacity characteristics in storing and releasing lithium, and performs a role of storing and releasing all lithium ions transferred from the positive electrode.

Meanwhile, in the present application, the use of the carbon-based active material as the active material means that the carbon-based active material is processed into a dot-type or spherical shape and is used as a material that performs a role of storing or releasing lithium.

For exmaple, in one embodiment of the present application, artificial graphite or natural graphite, which is a carbon-based active material, may have a dot-type shape, and its BET specific surface area may satisfy a range of $0.1 \, m^2/g$ to $4.5 \, m^2/g$. Also, surface-shaped graphite, which is a surface-type conductive material, may have a surface shape and its BET specific surface area may be about $5 \, m^2/g$ or more.

In one embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and their substitutes obtained by replacing hydrogen with Li, Na or Ca, and may include various copolymers of these.

The negative electrode binder according to one embodiment of the present application performs a role of holding the active material and the conductive material to prevent distortion and structural deformation of a negative electrode structure in the volume expansion and relaxation of the silicon-based active material. Any general binders can be applied as long as the above role is satisfied. For example, an aqueous binder may be used or a PAM-based binder may be used.

In one embodiment of the present application, the negative electrode binder may account for about 30 parts by weight or less of 100 parts by weight of the negative electrode composition, for example, or may account for about 25 parts by weight or less or about 20 parts by weight or less, and about 5 parts by weight or more or about 10 parts by weight or more.

According to one embodiment of the present application, a method of manufacturing a negative electrode active material is provided. The manufacturing method of the negative electrode active material includes the step of rapidly cooling metal silicon to form a silicon precursor; and the step of grinding the silicon precursor to form a silicon-based active material. The rapid cooling step includes melt-spinning, suction casting or injection casting.

As described above, in the manufacturing of the silicon-based active material, the metal silicon itself is not directly pulverized whereas for the silicon precursor formed through the cooling speed adjustment in the rapid cooling process, the grain size is adjusted and the precursor is pulverized.

That is, the shorter the solidification time (Ts) during casting of the melted-state silicon, the faster the cooling speed. As the plate thickness of the silicon-based precursor satisfies the range of the above Formula 3 (*e.g*, about 10 $\mu$m to 2 mm), the solidification time is short and thus the cooling speed may be increased through adjustment. Also, as described above, as the cooling speed is increased through adjustment, the time for grains to grow is short and the above-described size of grains (*e.g.*, about 2 nm to 11 $\mu$m) may be satisfied.

The negative electrode active material manufacturing method provided in one embodiment of the present application further includes the step of heating the metal silicon in an induction furnace before the step of forming the silicon precursor by rapidly cooling the metal silicon.

As described above, when the metal silicon is placed in a melted state by being heated in the induction furnace, and then is subjected to the rapid cooling step, the rapid cooling includes melt-spinning, suction casting or injection casting. It is possible to employ any method that can form a plate-shaped silicon precursor by rapidly cooling melted-state metal silicon in accordance with the purpose of the present disclosure.

In general, melt-spinning may refer to a process in which a melted material is injected into a rotating Cu wheel and is rapidly cooled. Also, suction casting may refer to a casting process in which a melted material is sucked in vacuum from under a mold, and injection casting may refer to a casting process in which a melted material is introduced to a mold by high-pressure gas.

In the case of the above-described rapid cooling step, it is difficult to generally specify conditions because melt-spinning, suction casting and injection casting processes are different from each other and are diverse, but as a result, silicon-based precursors may be manufactured in a plate shape in all cases.

In the present application, during the rapid cooling, the cooling speed adjustment is different for each process, but in general, in melt-spinning, the faster the rotation speed of the wheel, the faster the cooling speed, and in the case of suction casting or injection casting, the thinner the mold thickness, the faster the cooling speed. Also, the cooling speed may be controlled by controlling the external temperature through, for example, a method of causing cooling water to flow into the mold, or cooling the wheel or mold by liquid nitrogen, and the like. Meanwhile, rapid cooling is a type of cooling method to form a plate-shaped metal silicon precursor by rapidly cooling the melted state MG silicon. The rapid cooling is a kind of solidification process conducted in a non-equilibrium state in which reactions such as phase transformation or grain coarsening that occurs in a cooling of an equilibrium state are suppressed. For example, when MG silicon is rapidly cooled using the melt-spinning, the cooling temperature may be controlled by adjusting the rotation speed of the Cu wheel, and it takes about less than one second for the melted state MG silicon of about 1,500 °C to be cooled to the ambient temperature of about 25 °C.

In the negative electrode active material manufacturing method provided in one embodiment of the present application, after the step of forming the silicon precursor by rapidly cooling the metal silicon, the silicon precursor satisfies the above-described Formulas 3 and 4.

The silicon precursor formed through the rapid cooling process satisfies the Formulas 3 and 4.

In the negative electrode active material manufacturing method provided in the present application, after the step of forming the silicon-based active material by grinding the silicon precursor, the silicon-based active material satisfies the above-described Formulas 1 and 2.

After the silicon precursor satisfying the specific Formulas 3 and 4 is formed through the rapid cooling process, the silicon-based active material satisfying the range of the above-described Formulas 1 and 2 may be manufactured through a pulverization process of the silicon precursor.

In one embodiment of the present application, the pulverization process may include one or more processes selected from the group consisting of ball mill, pin mill, disk mill and jet mill, but is not limited thereto. Any process can be applied as long as it is a pulverization process through which the plate-shaped metal silicon precursor is pulverized so as to manufacture the silicon-based active material satisfying the range of the above-described Formulas 1 and 2.

Through the above-described pulverization process, it is possible to manufacture the silicon-based active material satisfying the above-described range of the Formulas 1 and 2.

In one embodiment of the present application, a negative electrode for a lithium secondary battery is provided. The negative electrode includes a negative electrode current collector layer; and a negative electrode active material layer formed on one surface or both surfaces of the negative electrode current collector layer. The negative electrode active material layer includes the negative electrode composition according to the present application or a cured product thereof.

FIG. 3 is a view illustrating a stacked structure of the negative electrode for the lithium secondary battery according to one embodiment of the present application. For example, it can be seen that a negative electrode 100 for a lithium secondary battery includes a negative electrode active material layer 20 on one surface of a negative electrode current collector layer 10. FIG. 3 illustrates that the negative electrode active material layer is formed on one surface, but the negative electrode active material layers may be included on both surfaces of the negative electrode current collector layer.

In one embodiment of the present application, the negative electrode for the lithium secondary battery may be formed by applying and drying a negative electrode slurry containing the negative electrode composition, on one surface or both surfaces of the negative electrode current collector layer.

Here, the negative electrode slurry may contain the above-described negative electrode composition; and a slurry solvent.

In one embodiment of the present application, the solid content of the negative electrode slurry may satisfy a range of about 5% to 40%.

In another embodiment, the solid content of the negative electrode slurry may satisfy a range of about 5% to 40%, for example, about 7% to 35%, or about 10% to 30%.

The solid content of the negative electrode slurry may mean the content of the negative electrode composition included in the negative electrode slurry, and may mean the content of the negative electrode composition relative to 100 parts by weight of the negative electrode slurry.

When the solid content of the negative electrode slurry satisfies the above range, the viscosity is appropriate in formation of the negative electrode active material layer. Therefore, particle agglomeration of the negative electrode composition can be minimized, and thus, the negative electrode active material layer can be efficiently formed.

In one embodiment of the present application, the slurry solvent can be used without limitation as long as the slurry solvent can dissolve the negative electrode composition. For example, water or N-methyl-2-pyrrolidone (NMP) may be used.

In one embodiment of the present application, the negative electrode current collector layer generally has a thickness of about 1 $\mu$m to 100 $\mu$m. This negative electrode current collector layer is not particularly limited as long as the negative electrode current collector layer has high conductivity without causing chemical changes in the corresponding battery. For example, copper, stainless steel, aluminum, nickel, titanium, calcined carbon, copper or stainless steel whose surface is treated with carbon, nickel, titanium, silver, etc., and aluminum-cadmium alloy may be used. Also, it is possible to strengthen the bonding strength of the negative electrode active material by forming fine irregularities on the surface, and the use in various forms such as a film, a sheet, a foil, a net, a porous body, a foam, and a nonwoven fabric is possible.

In the negative electrode for the lithium secondary battery provided in one embodiment of the present application, the thickness of the negative electrode current collector layer is about 1 $\mu$m to 100 $\mu$m, and the thickness of the negative electrode active material layer is about 5 $\mu$m to 500 $\mu$m.

However, the thicknesses may be variously modified according to the type and application of the negative electrode to be used.

In one embodiment of the present application, the porosity of the negative electrode active material layer may satisfy a range of about 10% to 60%.

In another embodiment, the porosity of the negative electrode active material layer may satisfy a range of about 10% to 60%, for example, about 20% to 50%, or about 30% to 45%.

The porosity varies depending on the composition and content of the silicon-based active material; the conductive material; and the binder included in the negative electrode active material layer. For example, the above range is satisfied when the composition and content of the silicon-based active material to be included according to the present application; and the conductive material become specific values. Accordingly, in the electrode, the electrical conductivity and the resistance satisfy appropriate ranges.

In one embodiment of the present application, provided is a lithium secondary battery that includes a positive electrode; the negative electrode for the lithium secondary battery according to the present application; a separator provided between the positive electrode and the negative electrode; and an electrolyte.

FIG. 4 is a view illustrating a stacked structure of the lithium secondary battery according to one embodiment of the present application. For example, a negative electrode 100 for the lithium secondary battery can be seen, which includes a negative electrode active material layer 20 on one surface of a negative electrode current collector layer 10. A positive electrode 200 for the lithium secondary battery can be seen, which includes a positive electrode active material layer 40 on one surface of a positive electrode current collector layer 50. It can be seen that the negative electrode 100 for the lithium secondary battery and the positive electrode 200 for the lithium secondary battery are formed in a stacked structure with a separator 30 interposed therebetween.

The secondary battery according to one embodiment of the present specification may include the above-described negative electrode for the lithium secondary battery. For example, the secondary battery may include a negative electrode, a positive electrode, a separator interposed between the positive electrode and the negative electrode, and an electrolyte, and the negative electrode is the same as the above-described negative electrode. Since the negative electrode has been described above, detailed descriptions thereof will be omitted.

The positive electrode may include a positive electrode current collector and a positive electrode active material layer that is formed on the positive electrode current collector, and includes the positive electrode active material.

In the positive electrode, the positive electrode current collector is not particularly limited as long as it has conductivity without causing chemical changes in the battery. For example, stainless steel, aluminum, nickel, titanium, calcined carbon, or aluminum or stainless steel whose surface is treated with carbon, nickel, titanium, silver, etc. may be used. Also, the positive electrode current collector may usually have a thickness of 3 to 500 $\mu$m, and it is also possible to increase the adhesion of the positive electrode active material by forming fine irregularities on the surface of the current collector. For example, the use in various forms such as a film, a sheet, a foil, a net, a porous body, a foam, and a nonwoven fabric is possible.

The positive electrode active material may be a commonly used positive electrode active material. For example, examples of the positive electrode active material may include: a layered compound such as lithium cobalt oxide ($LiCoO_2$) and lithium nickel oxide ($LiNiO_2$), or a compound substituted with one or more transition metals; lithium iron oxide such as $LiFe_3O_4$; lithium manganese oxide such as the chemical Formulas $Li_{1+c1}Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxide such as $LiV_3O_8$, $V_2O_5$, and $Cu_2V_2O_7$; Ni site-type lithium nickel oxide represented by the chemical Formula $LiNi_{1-c2}M_{c2}O_2$ (where M is at least one selected from the group including Co, Mn, Al, Cu, Fe, Mg, B and Ga, and $0.01 \leq c2 \leq 0.3$ is satisfied); lithium manganese composite oxide represented by the chemical Formula $LiMn_{2-c3}M_{c3}O_2$ (where M is at least one selected from the group including Co, Ni, Fe, Cr, Zn and Ta, and $0.01 \leq c3 \leq 0.1$ is satisfied) or $Li_2Mn_3MO_8$ (where M is at least one selected from the group including Fe, Co, Ni, Cu and Zn); and $LiMn_2O_4$ in which a part of Li in the chemical Formula is substituted with an alkaline earth metal ion, but are not limited to these. The positive electrode may also be Li-metal.

The positive electrode active material layer may include a positive electrode conductive material and a positive electrode binder together with the above-described positive electrode active material.

The positive electrode conductive material is used to provide conductivity to the electrode, and can be used without particular limitation in a configured battery as long as it has electronic conductivity without causing chemical changes. Examples may include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, and among these, one type may be used alone or a mixture of two or more types may be used.

Also, the positive electrode binder performs a role of improving the adhesion between particles of the positive electrode active material and the adhesive strength between the positive electrode active material and the positive electrode current collector. Examples may include polyvinylidenefluoride (PVDF), vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and among these, one type may be used alone or a mixture of two or more types may be used.

The separator separates the negative electrode and the positive electrode from each other and provides a movement passage of lithium ions and can be used without particular limitation as long as the separator is usually used as a separator in the secondary battery. Examples are those having low resistance to ion movement of the electrolyte and excellent electrolyte moisture retention capacity. For example, porous polymer films, or a stacked structure of two or more layers of these may be used. For example, the porous polymer films may be made of polyolefin-based polymers such as an ethylene homopolymer, a propylene homopolymer, an ethylene/butene copolymer, an ethylene/hexene copolymer and an ethylene/methacrylate copolymer. In addition, a conventional porous non-woven fabric, for example, a non-woven fabric made of high melting point-glass fiber, polyethyleneterephthalate fiber, etc. may also be used. Also, a coated separator containing ceramic components or polymer materials may be also used so as to ensure heat resistance or mechanical strength, and optionally, the use in a single-layer or multi-layer structure is possible.

Examples of the electrolyte may include an organic liquid electrolyte, an inorganic liquid electrolyte, a solid polymer electrolyte, a gel-type polymer electrolyte, a solid inorganic electrolyte, and a melted inorganic electrolyte, which can be used in manufacturing of the lithium secondary battery, but are not limited to these.

For example, the electrolyte may include a non-aqueous organic solvent and a metal salt.

As for the non-aqueous organic solvent, it is possible to use, for example, aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl pyropionate, and ethyl propionate.

Among the above carbonate-based organic solvents, ethylene carbonate and propylene carbonate, which are cyclic carbonates, can be used because they are high-viscosity organic solvents and can easily dissociate lithium salts due to a high dielectric constant. Then, when mixed with linear carbonates having a low viscosity and a low dielectric constant, such as dimethyl carbonate and diethyl carbonate, at an appropriate ratio, these cyclic carbonates may be used because an electrolyte having a high electrical conductivity can be made.

As for the metal salt, a lithium salt may be used, and the lithium salt is a material that is easily soluble in the non-aqueous electrolyte. For example, as anions of the lithium salt, one or more types selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used.

In addition to the electrolyte components, for the purpose of improving battery life characteristics, suppressing battery capacity reduction, and improving battery discharge capacity, the electrolyte may further include one or more types of additives, such as, for example, a haloalkylene carbonate-based compound such as difluoro ethylene carbonate, pyridine, triethylphosphite, triethanolamine, cyclic ether, ethylene diamine, n-glyme, hexaphosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride.

In one embodiment of the present disclosure, provided are a battery module including the above secondary battery as a unit cell and a battery pack including the same. The battery module and the battery pack include the above secondary battery having a high capacity, and high rate characteristics, and cycling characteristics, and may be used as a power source of medium-to-large devices selected from the group including an electric vehicle, a hybrid electric vehicle, a plug-in hybrid electric vehicle and a power storage system.

Hereinafter, embodiments are presented to aid understanding of the present disclosure. However, the above embodiments are merely illustrative of the present description, and it is obvious to those skilled in the art that various changes and modifications are possible within the scope of the present description and the range of the technical spirit, and it is natural that these changes and modifications fall within the scope of the attached patent claims.

**<Production Example>**

**<Manufacturing of silicon-based precursor>**

**<Example 1>**

MG silicon was put in a graphite crucible and was melted by using an induction furnace, and then was formed into a plate-shaped silicon precursor through a melt-spinning process.

For example, a current of 10 kA flowed through a copper coil to prepare melted-state silicon of 2000°C, and then the melted-state silicon was injected into a copper wheel rotating at a speed of 3000 rpm and having a diameter of 25 cm, at a pressure of 1.2 kPa to obtain a plate-shaped silicon precursor. Here, it can be found that the plate thickness of the silicon-based precursor was about 20 $\mu$m, and the grain size was about 50 nm, which satisfy the above-described Formulas 3 and 4, respectively.

In Examples 2 and 3 and Comparative Example 3, silicon-based precursors were prepared in the same manner as in Example 1 except that the rotation speed of Example 1 was changed to conditions in the following table 1 to control the cooling speed during rapid cooling using melt-spinning.

[Table 1]

|  | Rapid cooling | Rotation speed | Pressure | Formula 3 | Formula 4 |
|---|---|---|---|---|---|
| Example 1 | Melt-spinning | 3000 rpm | 1.2 kPa | 20 $\mu$m | 50 nm |
| Example 2 | Melt-spinning | 4000 rpm | 1.2 kPa | 15 $\mu$m | 40 nm |

(continued)

|  | Rapid cooling | Rotation speed | Pressure | Formula 3 | Formula 4 |
|---|---|---|---|---|---|
| Example 3 | Melt-spinning | 1000 rpm | 1.2 kPa | 100 $\mu$m | 300 nm |
| Comparative Example 1 | X | X | X | X | X |
| Comparative Example 2 | X | X | X | X | X |
| Comparative Example 3 | Melt-spinning | 100 rpm | 1.2 kPa | 3 mm | 2.5 $\mu$m |

In the case of Example 2, the rotation speed of the copper wheel in the melt-spinning process was 4000 rpm and was higher than 3000 rpm in Example 1. In this case, it can be found that the plate thickness of the silicon-based precursor was about 15 $\mu$m, and the grain size was about 40 nm, which satisfy the above-described Formulas 3 and 4, respectively. Also, in the case of Example 3, the rotation speed of the copper wheel in the melt-spinning process was 1000 rpm. In this case as well, it can be found that the plate thickness of the silicon-based precursor was about 100 $\mu$m, and the grain size was about 300 nm, which satisfy the above-described Formulas 3 and 4, respectively.

In the case of Comparative Examples 1 and 2, rather than being put into a graphite crucible, melted using an induction furnace, and formed into a plate-shaped silicon precursor through a melt-spinning process, MG silicon itself was used, as it was, for performing a milling process to be described below. Meanwhile, in the case of Comparative Example 3, the rotation speed of the copper wheel in the melt-spinning process was 100 rpm. The plate thickness of the silicon-based precursor was about 3 mm, which was thicker than those in Examples of the present disclosure, and the grain size was 2.5 $\mu$m, which was larger than those in Examples of the present disclosure, so that it can be found that the above-described Formulas 3 and 4 are not satisfied.

**<Example 4>**

In Example 4, MG silicon was placed in a melted state through arc melting unlike in Examples 1, 2, and 3 described above, and then was formed into a plate-shaped silicon precursor through a suction casting process.

For example, the inside of a chamber with a vacuum degree of $10^{-6}$ torr was filled with argon at a pressure of 0.5 kPa so that a high-purity argon atmosphere was formed. Then, silicon in a melted state of 2000°C was prepared by using arc plasma. Next, after the vacuum degree for the bottom of a mold was maintained at $10^{-5}$ torr or more, a valve between the bottom of the mold and the chamber was opened. Then, the melted-state silicon was sucked into the mold to prepare a silicon precursor in a plate shape. The mold used herein had a size with a thickness of 0.5 mm, a width of 10 mm, and a length of 50 mm, and the grain size was 50 nm.

A silicon-based precursor was prepared in the same manner as in Example 4 except that the mold thickness in Example 4, which determines a cooling speed during rapid cooling using suction casting, was changed to the condition of the following table 2.

[Table 2]

|  | Rapid cooling | Plate-shaped mold thickness | Formula 3 | Formula 4 (nm) |
|---|---|---|---|---|
| Example 4 | Suction casting | 0.5 mm | 500 $\mu$m | 400 nm |
| Example 5 | Suction casting | 0.4 mm | 400 $\mu$m | 500 nm |
| Example 6 | Suction casting | 1 mm | 100 $\mu$m | 1000 nm |
| Comparative Example 4 | X | X | X | X |
| Comparative Example 5 | X | X | X | X |
| Comparative Example 6 | Suction casting | 3 mm | 3 mm | 2.5 $\mu$m |

It can be found that in the case of Examples 4, 5 and 6, the plate thicknesses of silicon precursors were 500 $\mu$m, 400 $\mu$m and 100 $\mu$m, respectively, which satisfy the condition of the Formula 3, and the grain sizes in silicon precursors were 400 nm, 500 nm and 1,000 nm, respectively, which satisfy the Formula 4.

In the case of Comparative Examples 4 and 5, rather than being placed in a melted state through arc melting and then formed into a plate-shaped silicon precursor through a suction casting process, MG silicon itself was used, as it was, for performing a milling process to be described below.

Meanwhile, it can be found that in the case of Comparative Example 6 with a plate-shaped mold thickness of 3 mm, the plate thickness of the silicon precursor was 3 mm and does not satisfy the condition of the Formula 3, and the grain size in the silicon precursor was 2.510 $\mu$m and does not satisfy the Formula 4.

From the determination based on the values of the above tables 1 and 2, it was confirmed that in general, it is easier to prepare a thinner silicon precursor in the melt-spinning process than in the suction casting process.

**<Manufacturing of silicon-based active material>**

Ball milling was performed on the above-prepared silicon-based precursor so as to produce a silicon-based active material.

For example, a wet grinding method using n-hexane as a medium was used, and zirconia ($ZrO_2$) was used for balls. Here, the mass ratio of the silicon-based precursor and the balls was set to about 1:40, and pulverization was performed for 30 min. The particle size of the prepared negative electrode active material was 5 $\mu$m, and the grain size was 50 nm, which satisfy the Formulas 1 and 2, respectively.

The above-described silicon precursors of Examples and Comparative Examples were ground in the same manner as described above, and the results are noted in Table 3.

[Table 3]

| | Formula 1 (particle size) | Formula 2 (grain size) | High angle grain boundary ratio |
|---|---|---|---|
| Example 1 | 5 $\mu$m | 50 nm | 45 % |
| Example 2 | 5 $\mu$m | 250 nm | 34 % |
| Example 3 | 3 $\mu$m | 40 nm | 55 % |
| Example 4 | 3 $\mu$m | 200 nm | 38 % |
| Example 5 | 7 $\mu$m | 100 nm | 40% |
| Example 6 | 7 $\mu$m | 500 nm | 30% |
| Comparative Example 1 | 5 $\mu$m | 5 $\mu$m | - |
| Comparative Example 2 | 3 $\mu$m | 3 $\mu$m | - |
| Comparative Example 3 | 7 $\mu$m | 7 $\mu$m | - |
| Comparative Example 4 | 11 $\mu$m | 1.2 $\mu$m | 18 % |
| Comparative Example 5 | 13 $\mu$m | 1.5 $\mu$m | 15 % |
| Comparative Example 6 | 15 $\mu$m | 2.0 $\mu$m | 10% |

From Table 3, it can be found that in all of Examples 1 to 6, the particle size (D50) of the silicon-based active material satisfies the Formula 1, whereas in Comparative Examples 5 and 6, the particle size (D50) does not satisfy the Formula 1. Also, it can be found that in all of Examples 1 to 6, the grain size of the silicon-based active material satisfies the Formula 2, whereas in all of Comparative Examples 1 to 6, the grain size does not satisfy the Formula 2. Also, it can be found that in all of Examples 1 to 6, the high angle grain boundary ratio is 30% or more, but in the case of Comparative Examples 4 to 6, the high angle grain boundary ratio is less than 30%.

**<Manufacturing of negative electrode>**

According to one embodiment, a negative electrode active material including the silicon-based active material of Table 3, a first conductive material, a second conductive material, and polyarcrylamide as a binder were added to distilled water as a solvent for forming a negative electrode slurry at a weight ratio of 80:9.6:0.4:10 to prepare the negative electrode slurry (solid concentration: 25 weight%).

For example, the first conductive material was plate-shaped graphite (specific surface area: 17 m$^2$/g, average particle diameter (D50): about 3.5 $\mu$m), and the second conductive material was SWCNT.

The [0006] mixing method involves dispersing the first conductive material, the second conductive material, the binder and water by using a homomixer at about 2500 rpm, for 30 min. Next, the above silicon-based active material was added and dispersion was performed at about 2500 rpm, for 30 min to prepare the negative electrode slurry.

The negative electrode slurry was coated on both surfaces of a copper current collector (thickness: 8 $\mu$m) as a negative electrode current collector layer at a loading amount of about 85 mg/25 cm$^2$, was roll-pressed, and dried in a vacuum oven of 130°C for 10 h. Then, a negative electrode active material layer (thickness: 33 $\mu$m) was formed. This was used as a negative electrode (thickness of negative electrode: 41 $\mu$m, porosity of negative electrode: 40.0%).

**<Manufacturing of secondary battery>**

According to one embodiment, $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of about 97:1.5:1.5 to prepare the positive electrode slurry (solid concentration: about 78 weight%).

The positive electrode slurry was coated on both surfaces of an aluminum current collector (thickness: 12 $\mu$m) as a positive electrode current collector at a loading amount of about 537 mg/25 cm$^2$, was roll-pressed, and dried in a vacuum oven of 130°C for 10 h. Then, a positive electrode active material layer (thickness: 65 $\mu$m) was formed, and a positive electrode was prepared (thickness of positive electrode: about 77 $\mu$m, porosity: about 26%).

A lithium secondary battery was manufactured by interposing a polyethylene separator between the positive electrode and the above negative electrode of Examples and Comparative Examples and injecting an electrolyte.

The electrolyte was obtained by adding about 3 weight% of vinylene carbonate relative to the total weight of the electrolyte, to an organic solvent, and adding $LiPF_6$ as a lithium salt at a concentration of about 1 M. In the organic solvent, fluoroethylene carbonate (FEC) and diethyl carbonate (DMC) were mixed at a volume ratio of 10:90.

**<Experimental Example>**

**Experimental Example 1: monocell lifespan performance result**

For secondary batteries including the above negative electrodes manufactured in Examples and Comparative Examples, lifespan evaluation was conducted by using an electrochemical charger/discharger and the capacity maintenance rate was evaluated. In-situ cycle test was conducted for the secondary battery at 4.2-3.0V 1C/0.5C, and in the test, the capacity maintenance rate was measured by charging/discharging (4.2-3.0V) at 0.33C/0.33C every 50 cycles.

life maintenance rate (%) = {(discharge capacity in Nth cycle)/(discharge capacity in first cycle)} X 100

[Table 4]

|  | Life maintenance rate (%) after 200 cycles |
|---|---|
| Example 1 | 91 |
| Example 2 | 88 |
| Example 3 | 89 |
| Example 4 | 86 |
| Example 5 | 87 |
| Example 6 | 84 |
| Comparative Example 1 | 72 |
| Comparative Example 2 | 70 |
| Comparative Example 3 | 69 |
| Comparative Example 4 | 68 |
| Comparative Example 5 | 66 |
| Comparative Example 6 | 65 |

As can be seen in Table 4, when the capacity maintenance rates were checked according to cycles in Examples 1 to 6 to which the present disclosure is applied and Comparative Examples 1 to 6, it can be found that the capacity maintenance rates of Comparative Examples to which the present disclosure is not applied are lower than those of Examples. This corresponds to a result obtained when the grain size of the silicon-based active material satisfies the range according to the present disclosure. Here, uniform reactions can be caused in intercalation/deintercalation reactions of lithium during charging/discharging, and the stress applied to the silicon-based active material can be reduced so that the breakage of particles can be alleviated and thus the life maintenance rate of the electrode can be improved.

Experimental Example 2: monocell resistance change

In Experimental Example 1, in the test, the capacity maintenance rate was measured by charging/discharging (4.2-3.0V) at 0.33C/0.33C every 50 cycles, and then the resistance was measured by discharging at 2.5C pulse at SOC50. Then, the resistance increase rates were compared and analyzed.

For the evaluation on each measurement of the resistance increase rate, data at the 200th cycle was calculated, and the results are noted in Table 5 below.

[Table 5]

|  | Resistance increase rate (%) after 200 cycles |
|---|---|
| Example 1 | 16 |
| Example 2 | 19 |
| Example 3 | 18 |
| Example 4 | 22 |
| Example 5 | 17 |
| Example 6 | 25 |
| Comparative Example 1 | 48 |
| Comparative Example 2 | 50 |
| Comparative Example 3 | 51 |
| Comparative Example 4 | 54 |
| Comparative Example 5 | 56 |
| Comparative Example 6 | 57 |

From Tables 4 and 5, it can be found that lifespan characteristics and resistance changes are excellent in batteries using silicon prepared in Examples 1 to 6 as negative electrode active materials. In the case of the negative electrode active material according to one embodiment of the present disclosure, unlike in a conventional grinding processing method, prior to MG-Si pulverization, a rapid cooling process is performed to form a plate-shaped silicon precursor, and the grain size is optimized through cooling speed adjustment. As in Examples, it is possible to obtain a silicon-based active material having nano-sized grains and satisfying a specific high angle grain boundary ratio by pulverizing a plate-shaped silicon precursor having nano-sized grains. It can be found that when this silicon-based active material is used to manufacture a negative electrode, the cycle capacity maintenance rate and the initial capacity efficiency are increased.

For reference, in the case of Comparative Examples 1 to 3, the particle size (Formula 1) and the grain size (Formula 2) of the silicon-based active material are the same, that is, a single-crystal form is made. This case corresponds to a case where no grain boundary is present inside particles of the silicon-based active material. Thus, a high angle grain boundary cannot exist. The case of Comparative Examples 4 to 6 corresponds to a case where since the value for the Formula 1 is larger than that for the Formula 2, grain boundaries are present inside particles, but the high angle grain boundary ratio does not fall within the scope of the present application. In the case of Examples 1 to 6 of the present application, through manufacturing by the above-described manufacturing method, high angle grain boundaries (HAGB) with high grain boundary energy are formed at the ratios of Table 3. It can be found that in the case of the high angle grain boundary, diffusion of lithium ions is easier than in the low angle grain boundary (LAGB), and thus the lifespan characteristics and the resistance increase rate are superior to those of Comparative Examples.

Although the present disclosure has been described above with reference to embodiments, a person skilled in the relevant technical field or a person with ordinary skill in the relevant technical field will understand that various modifications and changes can be made to the present disclosure within a scope not departing from the spirit and technical area of the present disclosure described in the patent claims to be described later. Therefore, the technical scope of the present disclosure is not limited to the contents described in the detailed description of the specification, but should be determined by the patent claims.

**Claims**

1. A negative electrode active material comprising:

   a silicon-based active material comprising silicon-based grains,
   wherein a high angle grain boundary ratio in the silicon-based grains is 30% or more, and
   the silicon-based active material includes a composition that satisfies following Formulas 1 and 2:

   [Formula 1]
   about 1 μm ≤ particle size (D50) of silicon-based active material ≤ 10 μm

   [Formula 2]
   about 2 nm ≤ grain size of silicon-based active material ≤ 1 μm

2. The negative electrode active material according to claim 1, wherein the silicon-based active material additionally comprises a pulverized product of a silicon precursor, and

   the silicon precursor includes a composition that satisfies following Formulas 3 and 4:

   [Formula 3]
   about 10 μm ≤ plate thickness of silicon precursor ≤ 2 mm

   [Formula 4]
   about 2 nm ≤ grain size in silicon precursor ≤ 1 μm

3. The negative electrode active material according to claim 1, wherein an average misorientation angle of the silicon-based grains is about 5° or more.

4. The negative electrode active material according to claim 1, wherein the silicon-based active material includes one or more selected from the group consisting of SiOx (x=0) and SiOx (0<x<2), and a content of SiOx (x=0) is about 70 parts by weight or more relative to 100 parts by weight of the silicon-based active material.

5. A silicon-based precursor comprising a composition satisfying following Formulas 3 and 4:

   [Formula 3]
   about 10 μm ≤ plate thickness of silicon precursor ≤ 2 mm

   [Formula 4]
   about 2 nm ≤ grain size in silicon precursor ≤ 1 μm

6. A method of manufacturing a negative electrode active material, the method comprising:

   applying a rapid cooling process to a metal silicon to form a silicon precursor; and
   grinding the silicon precursor to form a silicon-based active material,
   wherein the rapid cooling process of the metal silicon is conducted by any one of melt-spinning, suction casting, and injection casting.

7. The method according to claim 6, further comprising heating the metal silicon by an induction furnace before the rapid cooling process of the metal silicon,

8. The method according to claim 6, wherein after the forming of the silicon precursor by the rapid cooling process of the metal silicon,
   the silicon precursor comprises a composition that satisfies following Formulas 3 and 4:

[Formula 3]
about 10 μm ≤ plate thickness of silicon precursor ≤ 2 mm

[Formula 4]
about 2 nm ≤ grain size in silicon precursor ≤ 1 μm

9. The method according to claim 6, wherein after the forming of the silicon-based active material by grinding the silicon precursor, the silicon-based active material comprises a composition that satisfies following Formulas 1 and 2:

[Formula 1]
about 1 μm ≤ particle size (D50) of silicon-based active material ≤ 10 μm

[Formula 2]
about 2 nm ≤ grain size of silicon-based active material ≤ 100 nm

10. A negative electrode composition comprising:

the negative electrode active material according to claim 1;
a negative electrode conductive material; and
a negative electrode binder.

11. The negative electrode composition according to claim 10, wherein the negative electrode active material accounts for about 40 parts by weight or more of 100 parts by weight of the negative electrode composition.

12. The negative electrode composition according to claim 10, wherein the negative electrode conductive material includes a surface-type conductive material; and a linear-type conductive material.

13. A negative electrode for a lithium secondary battery, the negative electrode comprising:

a negative electrode current collector layer; and
a negative electrode active material layer provided on at least one surface or both surfaces of the negative electrode current collector layer,
wherein the negative electrode active material layer includes the negative electrode composition according to claim 10 or a cured product of the negative electrode composition according to claim 10.

14. The negative electrode for the lithium secondary battery according to claim 13, wherein a thickness of the negative electrode current collector layer is about 1 μm to 100 μm, and
a thickness of the negative electrode active material layer is about 5 μm to 500 μm.

15. A lithium secondary battery comprising:

a positive electrode;
the negative electrode for the lithium secondary battery according to claim 13;
a separator provided between the positive electrode and the negative electrode; and
an electrolyte.

16. A method of manufacturing a negative electrode active material, the method comprising:

preparing metal silicon in a melted state;
performing a rapid cooling process on the melted-state metal silicon to form a plate-shaped metal silicon precursor;
determining whether a plate thickness of the metal silicon precursor is about 10 μm to 2 mm, and whether a grain size of the metal silicon precursor is about 2 nm to 1 μm;
when determined that the plate thickness and the grain size of the metal silicon precursor is about 10 μm to 2 mm

and about 2 nm to 1 μm, respectively, grinding the metal silicon precursor to form a silicon-based active material; determining whether a particle size (D50) of the formed silicon-based active material is about 1 μm to 10 μm, and whether a grain size of the formed silicon active material is about 2 nm to 1 μm; and

when determined that the particle size (D50) and the grain size of the silicon-based active material is about 1 μm to 10 μm and about 2 nm to 1 μm, respectively, classifying the silicon-based active material as an active material for manufacturing a negative electrode of a lithium secondary battery.

17. The method according to claim 16, wherein the rapid cooling process is conducted by any one of melt-spinning, suction casting, and injection casting.

# FIG. 1

START

S1 — PREPARE MELTED-STATE METAL SILICON

S2 — PREPARE SILICON PRECURSOR BY RAPIDLY COOLING MELTED-STATE METAL SILICON

S3 — DOES SILICON PRECURSOR SATISFY FORMULAS 3 AND 4? — NO

YES

S4 — GRIND METAL SILICON PRECURSOR

S5 — DOES GROUND PRECURSOR SATISFY FORMULAS 1 AND 2? — NO

YES

S6 — OBTAIN SILICON-BASED NEGATIVE ELECTRODE ACTIVE MATERIAL

END

## FIG. 2

## FIG. 3

## FIG. 4

# FIG. 5

# FIG. 6

## INTERNATIONAL SEARCH REPORT

| International application No. |
| --- |
| **PCT/KR2024/001456** |

**A. CLASSIFICATION OF SUBJECT MATTER**

**H01M 4/38**(2006.01)i; **H01M 4/48**(2010.01)i; **H01M 4/1395**(2010.01)i; **H01M 4/04**(2006.01)i; **H01M 10/052**(2010.01)i; **C01B 33/113**(2006.01)i; **C01B 33/18**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/38(2006.01); B02C 19/06(2006.01); C01B 33/021(2006.01); H01M 10/052(2010.01); H01M 10/0525(2010.01); H01M 10/0567(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극(anode), 실리콘계 활물질(silicon-based active material), 결정립(grain), 고각 경계 비율(high angle grain boundary), 입도(diameter), 메탈 실리콘(metallurgical grade-silicon), 급속 냉각(rapid cooling), 분쇄(milling)

**C. DOCUMENTS CONSIDERED TO BE RELEVANT**

| Category* | Citation of document, with indication, where appropriate, of the relevant passages | Relevant to claim No. |
| --- | --- | --- |
| X | CN 107572529 B (YINLONG NEW ENERGY CO., LTD.) 18 February 2020 (2020-02-18) See claims 1, 6-7 and 17-19; and paragraphs [0079] and [0101]-[0103]. | 6 |
| Y | | 1-5,7-17 |
| Y | KR 10-2136820 B1 (KOREA METAL SILICON CO., LTD.) 23 July 2020 (2020-07-23) See claims 1 and 7; and paragraphs [0057]-[0060], [0070]-[0073] and [0123]. | 1-5,7-17 |
| Y | 전도만 등. 건식 분쇄 공정으로 Si 입도 제어를 통한 고용량 리튬이온전지 음극 소재의 개발. Clean Technology. 2018, vol. 24, no. 4, pp. 332-338 (JEON, Do-Man et al. Development of High Capacity Lithium Ion Battery Anode Material by Controlling Si Particle Size with Dry Milling Process.) See abstract; and page 335, left column. | 16-17 |
| A | KR 10-1749506 B1 (SAMSUNG SDI CO., LTD.) 21 June 2017 (2017-06-21) See entire document. | 1-17 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 May 2024** | **13 May 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/001456** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0133757 A (ELKEM ASA) 03 December 2019 (2019-12-03)<br>See entire document. | 1-17 |
| A | KR 10-2015-0018337 A (MK ELECTRON CO., LTD.) 23 February 2015 (2015-02-23)<br>See entire document. | 1-17 |

Form PCT/ISA/210 (second sheet) (July 2022)

## INTERNATIONAL SEARCH REPORT
### Information on patent family members

International application No.

**PCT/KR2024/001456**

| Patent document cited in search report | | | Publication date (day/month/year) | Patent family member(s) | | | Publication date (day/month/year) |
|---|---|---|---|---|---|---|---|
| CN | 107572529 | B | 18 February 2020 | CN | 107572529 | A | 12 January 2018 |
| KR | 10-2136820 | B1 | 23 July 2020 | CN | 115348949 | A | 15 November 2022 |
| | | | | JP | 2023-520472 | A | 17 May 2023 |
| | | | | JP | 7418607 | B2 | 19 January 2024 |
| | | | | US | 2023-0124479 | A1 | 20 April 2023 |
| | | | | WO | 2021-201360 | A1 | 07 October 2021 |
| KR | 10-1749506 | B1 | 21 June 2017 | EP | 2648249 | A1 | 09 October 2013 |
| | | | | EP | 2648249 | B1 | 23 March 2016 |
| | | | | KR | 10-2013-0114007 | A | 16 October 2013 |
| | | | | US | 2013-0266865 | A1 | 10 October 2013 |
| | | | | US | 9123955 | B2 | 01 September 2015 |
| KR | 10-2019-0133757 | A | 03 December 2019 | CN | 110537272 | A | 03 December 2019 |
| | | | | CN | 110537272 | B | 02 September 2022 |
| | | | | KR | 10-2021-0117358 | A | 28 September 2021 |
| | | | | KR | 10-2023-0054902 | A | 25 April 2023 |
| | | | | US | 11322741 | B2 | 03 May 2022 |
| | | | | US | 2020-0044245 | A1 | 06 February 2020 |
| | | | | WO | 2018-186749 | A1 | 11 October 2018 |
| KR | 10-2015-0018337 | A | 23 February 2015 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230052006

- JP 2009080971 A